# EUROPEAN PATENT SPECIFICATION

(11) **EP 3 418 082 B1**
(45) Date of publication and mention of the grant of the patent: **08.04.2020**
(21) Application number: 17177061.3
(22) Date of filing: 21.06.2017
(51) Int. Cl.: B60D 1/36, B60D 1/02

(54) **SELECTIVE LOCKING OF GUIDING FUNNEL**
SELEKTIVE VERRIEGELUNG VON FÜHRUNGSTRICHTERN
VERROUILLAGE SÉLECTIF D'UN ENTONNOIR DE GUIDAGE

(43) Date of publication of application: 26.12.2018
(73) Proprietor: VBG Group AB (Publ), 462 28 Vänersborg (SE)
(72) Inventor: Wensing, Udo, 46145 Oberhausen (DE); Hahnen, Hans-Boris, 47475 Kamp-Lintfort (DE)
(74) Representative: AWA Sweden AB

(56) References cited:
- US-A- 4 156 551
- US-A- 5 779 256
- US-A1- 2008 217 885

## Description

### Field of the Invention

The present invention relates to a trailer coupling for connecting a traction vehicle to a trailer.

### Background of the invention

In commonly available trailer couplings, a guiding funnel is often used to guide the drawbar eye into the correct position inside the guiding funnel for locking it in place therein. For example, the guiding funnel may be shaped as a frustum or an inverted wedge. Thus, even if the drawbar is slightly misaligned when the traction vehicle approaches the trailer and the drawbar eye is to be connected to the trailer coupling, the drawbar eye is guided towards its correct position by the guiding funnel. It should be understood that the inner walls of the guiding funnel are used to guide the drawbar eye into its correct position. As the drawbar is fixedly connected to the trailer, having a non-rotatable guiding funnel may cause restrictions of the turning radius of the traction vehicle that the trailer coupling is connected to. This is due to the fact that the drawbar runs a risk of engaging the inner walls of the guiding funnel if the traction vehicle turns sharply. However, having a rotatable guiding funnel decreases the guiding funnel's ability to guide the drawbar eye into the correct position as the guiding funnel may fold away under the pressure of a misaligned drawbar.

The prior art includes the trailer hitch alignment assembly kit disclosed in US 2008/0217885, the hitch guide for guiding a hitch coupling of a trailer into alignment with a hitch ball disclosed in US 5,779,256, and the device for automatically connecting and disconnecting pipings and wirings between rolling stocks disclosed in US 4,156,551.

### Summary of the Invention

An object of the present invention is therefore to alleviate the abovementioned problems and provide a trailer coupling that is prevented from rotating until a drawbar eye has been received by the trailer coupling, but that is allowed to rotate once a drawbar eye has been received.

The above and other objects which will be evident from the following description are achieved by a trailer coupling according to the present invention.

According to a first aspect of the present invention, a trailer coupling for connecting a traction vehicle to a trailer is provided, comprising a coupling body; a guiding funnel pivotally connected to the coupling body, the guiding funnel being configured to receive and guide a drawbar eye; and two locking arms connected to opposite sides of the coupling body, wherein the locking arms may move between a locking position and an unlocking position, wherein in the locking position, the locking arms engage the guiding funnel so as to prevent it from pivoting relative to the coupling body, wherein in the unlocking position, the locking arms are moved out of engagement with said guiding funnel, and wherein the locking arms are arranged to be pushed from the locking position into the unlocking position when a drawbar eye is received in the guiding funnel.

It should be understood that in the unlocked position, when the locking arms are disengaged from the guiding funnel, the guiding funnel is free to pivot relative to the coupling body. Thus, when the trailer coupling is in use for pulling a trailer behind a traction vehicle, with the drawbar eye received in the guiding funnel, the guiding funnel may pivot in response to the traction vehicle changing direction during travel. This allows for a safer connection between the trailer and the traction vehicle by allowing a greater degree of freedom when turning. This in turn enables the coupling to fulfill regulatory requirements with respect to angular variation between traction vehicle and trailer.

When the drawbar eye is not received in the funnel, and the locking arms thus engage the funnel, the guiding funnel is prevented from pivoting. The inner walls of the guiding funnel may be used to guide the drawbar eye until it reaches its correct position within the guiding funnel. If the guiding funnel were allowed to pivot relative to the coupling body during the coupling action, then a misalignment of the drawbar relative to the trailer coupling might cause the guiding funnel to pivot, thus preventing it from guiding the drawbar eye into its correct position.

It is to be understood that the coupling body is the portion of the trailer coupling that is rigidly connected to the traction vehicle, and that the drawbar eye is connected to the drawbar, which in turn is connected to the trailer.

The guiding funnel may alternatively be referred to as a guiding mouth.

According to one exemplary embodiment, the guiding funnel is connected to the coupling body by means of a pivot joint. A pivot joint is to be understood as being a joint which allows rotational movement about a single vertical axis, and no translational movement.

A drawbar is to be understood as being a component rigidly fixed to a trailer that is to be pulled by a traction vehicle. The drawbar may comprise a trailer connecting portion, and either a drawbar eye directly or it may comprise a portion that is to be removably connected to a flanged drawbar eye, i.e. a connecting portion used to connect the trailer coupling to the drawbar via a drawbar eye. The drawbar eye may comprise an annular portion for connecting the drawbar eye to a locking arrangement, such as a coupling pin, of the trailer coupling.

The correct position of the drawbar eye relative the trailer coupling is to be understood as being the position in which the annular portion of the drawbar eye is aligned with a locking arrangement, such as a coupling pin, of the trailer coupling. For example, when the center of the annular portion of the drawbar eye is aligned with the coupling pin of the trailer coupling, the drawbar eye may be considered to be in its correct position.

According to one exemplary embodiment, each one of the locking arms is biased towards the locking position.

Thus, a more secure and reliable trailer coupling may be achieved. The locking arms may for example be biased towards the locking position by biasing means. For example, the biasing means may be a helical torsion spring or a leaf spring.

According to one exemplary embodiment, the two locking arms are pivotally connected to the coupling body.

By being pivotally connected to the coupling body, the two locking arms may, when in a locking position, take up forces in a direction that goes substantially directly through the pivot point of the locking arms. Thus, forces resulting from the guiding funnel trying to rotate are taken up by the pivot joint, thereby providing means for securely preventing the guiding funnel from pivoting.

According to one exemplary embodiment, wherein in the locking position, the locking arms abut a respective locking portion of the guiding funnel so that the locking arms prevent the guiding funnel from pivoting relative to the coupling body.

According to one exemplary embodiment, the guiding funnel has an inner surface and an outer surface, the inner surface being the surface that faces away from the traction vehicle when the trailer coupling is in use, and the outer surface is the surface opposite the inner surface, wherein the locking portion of the guiding funnel is arranged on the outer surface.

The locking portion of the guiding funnel may for example be a ridge provided on the outside or outer surface of the guiding funnel.

According to one exemplary embodiment, when in the locking position, the locking arms engage a ridge on the outer surface of the guiding funnel. Thus, the guiding funnel is prevented from rotating relative to the coupling body in either direction by each respective locking arm. It should be understood that the ridge is arranged such that the locking arms are prevented from sliding further along the outer surface of the guiding funnel when they engage the ridge.

According to one exemplary embodiment, the guiding funnel comprises at least one window for allowing a portion of each one of the two locking arms to extend therethrough, and wherein each one of the two locking arms comprises a protrusion arranged to extend at least partly inside the guiding funnel when the locking arms are in the locking position, and wherein the locking arms are arranged to move from a locking position to an unlocking position when the guiding funnel receives a drawbar eye and the drawbar eye abuts the protrusions of the two locking arms.

Thus, even though the two locking arms are located on the outside of the guiding funnel and the drawbar eye is to be received on a position located on the inside of the guiding funnel, the drawbar eye may engage the locking arms and force them from a locking position to an unlocking position when the drawbar eye is received by the guiding funnel. This enables the trailer coupling to be locked, and thereby prevented from rotating, before the drawbar eye has been received, and unlocked once the drawbar eye has been received.

The at least one window may for example be one window extending from one side of the guiding funnel to the other, or two windows arranged on either side of the guiding funnel.

According to one exemplary embodiment, the trailer coupling comprises a coupling pin arranged to lock the drawbar eye in the guiding funnel once the drawbar eye is in a predetermined position inside the guiding funnel.

The predetermined position may for example be the abovementioned correct position of the drawbar eye relative to the trailer coupling. The coupling pin may for example be a straight rod slidably connected to the coupling body and arranged to engage the drawbar eye.

According to one exemplary embodiment, the two locking arms are arranged to move from a locking position to an unlocking position in response to the guiding funnel receiving a drawbar eye in the predetermined position.

Thus, the guiding funnel is kept locked in place and prevented from rotating until the drawbar eye has been received. This allows the guiding funnel to guide the drawbar eye into the correct position without being caused to rotate.

### Brief description of the drawings

The above, as well as additional objects, features and advantages of the present invention, will be better understood through the following illustrative and non-limiting detailed description of exemplary embodiments of the present invention, with reference to the appended drawing, wherein:
Figure 1 is a perspective view of a trailer coupling according to one exemplary embodiment of the present invention and a drawbar eye, wherein the drawbar eye has not been received by said trailer coupling,
Figure 2 is a perspective view of the trailer coupling and the drawbar eye of Fig. 1, wherein the drawbar eye has been received by said trailer coupling,
Figure 3 is a top view of the trailer coupling and the drawbar eye of Fig. 1, wherein the drawbar eye has not been received by said trailer coupling,
Figure 4 is a top view of the trailer coupling and the drawbar eye of Fig. 1, wherein the drawbar eye has been received by said trailer coupling,
Figure 5 is a top view of the trailer coupling and the drawbar eye of Fig. 1, wherein the drawbar eye has been received by said trailer coupling, and wherein the drawbar eye has been rotated relative to the trailer coupling, thus causing the guiding funnel to rotate with it.

### Detailed description of currently preferred embodiments

In the present detailed description, embodiments of a trailer coupling according to the present invention are mainly discussed with reference to drawings showing a trailer coupling and a drawbar eye with components and portions being relevant in relation to various embodiments of the invention. It should be noted that this by no means limits the scope of the invention, which is also applicable in other circumstances for instance with other types or variants of trailer couplings than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

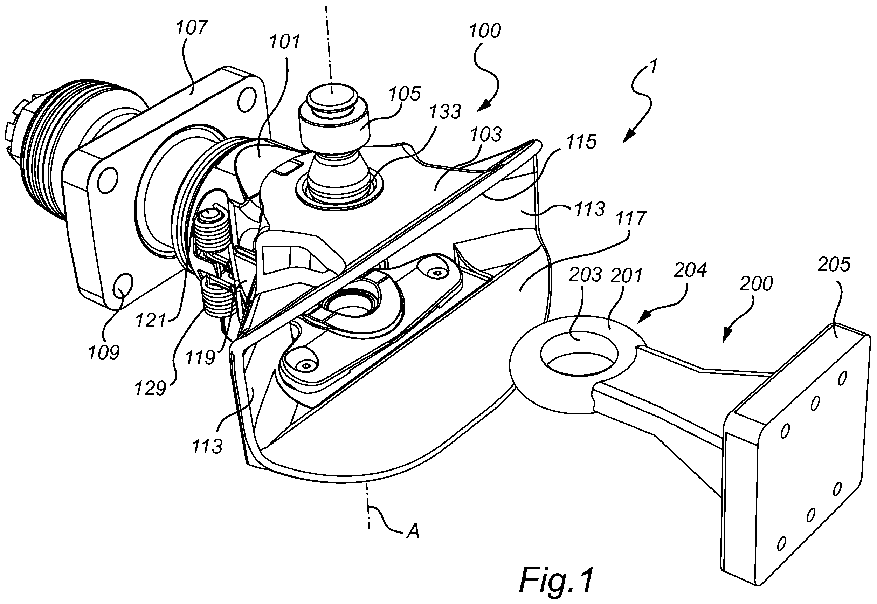

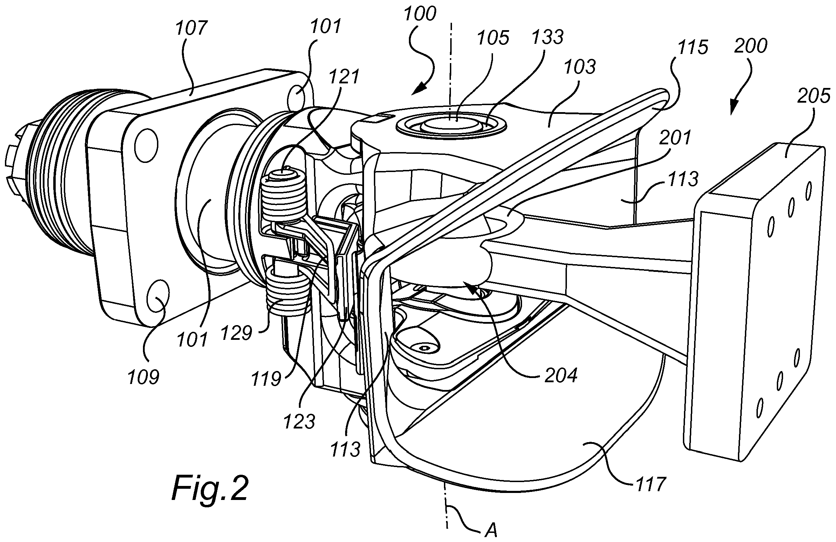

Figure 1 is a perspective view of a trailer coupling 100 according to one exemplary embodiment of the present invention and a connection portion 200 including a drawbar eye 204 and a connection flange 205. Here, the drawbar eye 204 has not been received by said trailer coupling 100. The trailer coupling 100 comprises a coupling body 101 and a guiding funnel 103 pivotally connected to the coupling body 101 about a vertical axis of rotation A. The trailer coupling 100 further comprises a vertically oriented coupling pin 105 for coupling the drawbar eye 204 to the trailer coupling 100. The coupling pin 105 is arranged inside an annular opening 133 on the guiding funnel 103 and is arranged to translationally move along a vertical line inside said annular opening 133 between a coupling position, as seen in Fig. 2, and an uncoupling position, as seen in Fig. 1. The coupling pin 105 is coaxially aligned with the vertical axis of rotation A of the guiding funnel 103.

The drawbar eye 204 comprises an annular portion 201 which can be inserted into the guiding funnel 103 and locked in place therein by means of the coupling pin 105 engaging with the inner circumferential wall 203 of the annular portion 201. The connection flange 205 is configured to secure the connection portion 200 with a drawbar (not shown) connected to the drawbeam of the trailer that is to be pulled by the traction vehicle. This is readily understood by the skilled person.

The coupling body 101 comprises a connecting portion 107 used to securely connect the trailer coupling 100 to a traction vehicle. The connecting portion 107 is arranged to be connected to a traction vehicle at least by a number of bolts (not shown) going through four through-holes 109 located on the connecting portion 107. Thus, the trailer coupling 100 may be secured to the traction vehicle.

The guiding funnel 103 is a funnel-shaped component of the trailer coupling 100 having two inner side walls 113 and a respective upper and lower inner wall 115, 117. The portion of the guiding funnel 103 that is located furthest away from its opening, i.e. closest to the traction vehicle, is pivotally connected to the coupling body 101. The guiding funnel 103 opens up in a direction away from the connecting portion 107, i.e. the widest portion of the guiding funnel 103 is the portion that is located farthest from the connecting portion 107. Moving towards the connecting portion 107 from the opening, the guiding funnel 103 gradually becomes smaller and smaller. In other words, the inner walls 111 of the guiding funnel 103 are angled inwards such that a drawbar eye 204 connected to a trailer may be guided to the correct position inside the guiding funnel 103 for securing the trailer to the traction vehicle. Both the two inner side walls 113 and the upper and lower inner walls 115, 117 are angled inwards in order to guide the drawbar eye 204 into both horizontal and vertical alignment with the trailer coupling 100 and, ultimately, with the coupling pin 105. The drawbar eye 204 is considered to be aligned with the trailer coupling 100 when the annular portion 201 of the drawbar eye 204 is aligned with the coupling pin 105 and, consequently, with the vertical axis of rotation A of the guiding funnel 103.

The trailer coupling 100 further comprises a pair of locking arms 119 pivotally connected to the coupling body 101 on either side of the guiding funnel 103. The locking arms 119 may pivot between a locking position and an unlocking position. In the locking position, the locking arms 119 engage the outside of the guiding funnel 103 so as to prevent it from pivoting. Each one of the two locking arms 119 extend from a pivot joint 121 on one end to a guiding funnel abutting portion 123 on the other end. A pivot joint 121 connects each of the two locking arms 119 to the coupling body 101. At each one of the two pivot joints 121 of the locking arms 119, there is located a biasing member 129 configured to bias the locking arms 119 towards the locking position. The biasing members 129 are here helical torsion springs connected to the coupling body 101 and each respective locking arm 119. Between the pivot joint 121 and the guiding funnel abutting portion 123 on each of the two locking arms 119, there is located a protrusion 125. The locking arms 119 are arranged such that when the locking arms are in their locking position, the protrusion 125 on either locking arm 119 extends through a corresponding window or opening 127 on the guiding funnel 103 and the guiding funnel abutting portion 123 on either locking arm 119 engages the guiding funnel 103. As the guiding funnel abutting portion 123 of either locking arm 119 engages corresponding ridge-shaped locking portions 131 located on either side of the guiding funnel 103, the guiding funnel 103 is prevented from pivoting relative to the coupling body 101. The ridge-shaped locking portions 131 are located on the outer surface of the guiding funnel 103. In Fig. 1, the locking arms 119 are in the locking position. The window or opening 127 on the guiding funnel 103 is a through-hole extending through either one of the two side walls 113 close to where the annular portion 201 of the drawbar eye 204 is to be received by the guiding funnel 103. Since the protrusions 125 extend through the windows or openings 127 of the guiding funnel 103, the locking arms 119 may be caused to pivot from their locking position to their unlocking position by the annular portion 201 of a drawbar eye 204 engaging the protrusions 125 as the annular portion 201 is being received by the guiding funnel 103. Thus, the guiding funnel 103 may be prevented from pivoting relative to the coupling body 101 by the guiding funnel abutting portions 123 of the locking arms 119 engaging the guiding funnel 103 from both sides until the drawbar eye 204 has been received by the guiding funnel 103, whereupon the locking arms 119 are caused to pivot outwards from their locking position towards their unlocking position by the annular portion 201 of the drawbar eye 204 engaging the protrusions 125 of the locking arms 119 that extend through the corresponding windows or openings 127 in the guiding funnel 103 and forcing them outwards.

Figure 2 is a perspective view of the trailer coupling 100 and the connection portion 200 of Fig. 1, wherein the drawbar eye 204 has been received by said trailer coupling. In Figure 2, the annular portion 201 of the drawbar eye 204 has been moved so that it is coaxially aligned with the vertical axis of rotation A of the guiding funnel 103. The coupling pin 105 has been moved to its coupling position in which it engages the inner circumferential wall 203 of the drawbar eye 204 as well as the annular opening 133 on the guiding funnel 103. Thus, the drawbar eye 204 is prevented from leaving the guiding funnel 103 by the coupling pin 105. Furthermore, since the drawbar eye 204 has been received in the correct position inside the guiding funnel 103, the annular portion 201 engages the protrusions 125 of the locking arms 119 so that the locking arms 119 are caused to pivot outwards to their unlocking position. This means that the guiding funnel abutting portions 123 of the locking arms 119 are no longer engaging the ridge-shaped locking portions 131 located on either side of the guiding funnel 103. Thus, in Fig. 2 the guiding funnel 103 is free to pivot about the vertical axis of rotation A.

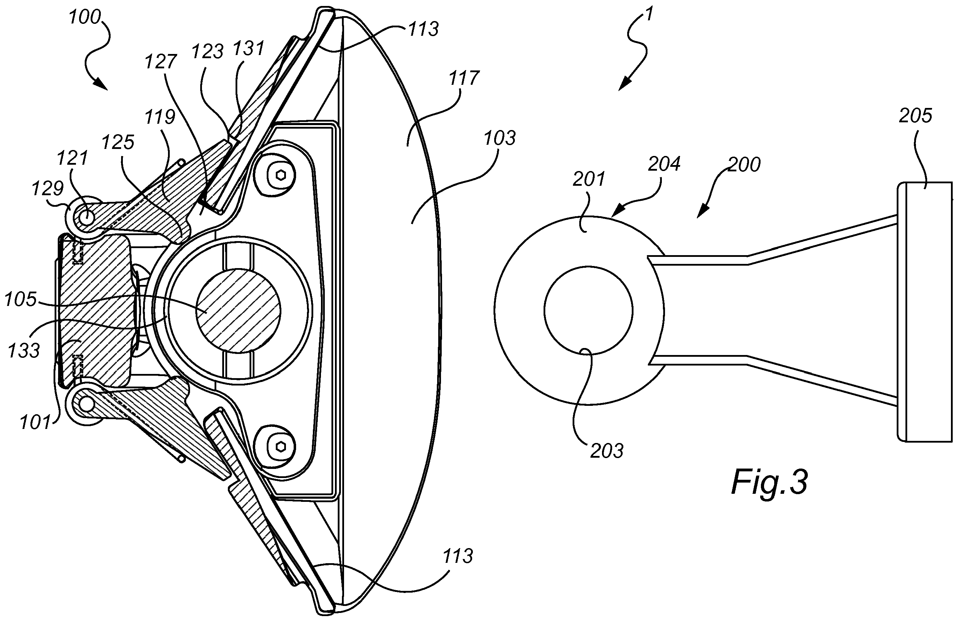

Figure 3 is a top view of the trailer coupling 100 and the connection portion 200 of Fig. 1, wherein the drawbar eye 204 has not been received by said trailer coupling 100. Here, it seen how the protrusions 125 of the locking arms 119 extend through the windows or openings 127 of the guiding funnel 103. Thus, the locking arms 119 are positioned such that when the annular portion 201 of the drawbar eye 204 aligns with the coupling pin, i.e. is received in the guiding funnel 103, the locking arms 119 will be caused to pivot outwards to their unlocking position. In Fig. 3, the locking arms 119 are in their locking position, in which the guiding funnel abutting portions 123 engages the ridge-shaped locking portion 131 on either side of the guiding funnel 103. The locking arms 119 are biased towards the locking position by the springs 129, which are connected to the coupling body 101 and the locking arms 119. Thus, the guiding funnel 103 is prevented from pivoting until the locking arms move to their unlocking position. This allows the guiding funnel 103 to guide the drawbar eye 204 towards alignment with the coupling pin 105, even if the drawbar eye 204 is misaligned initially.

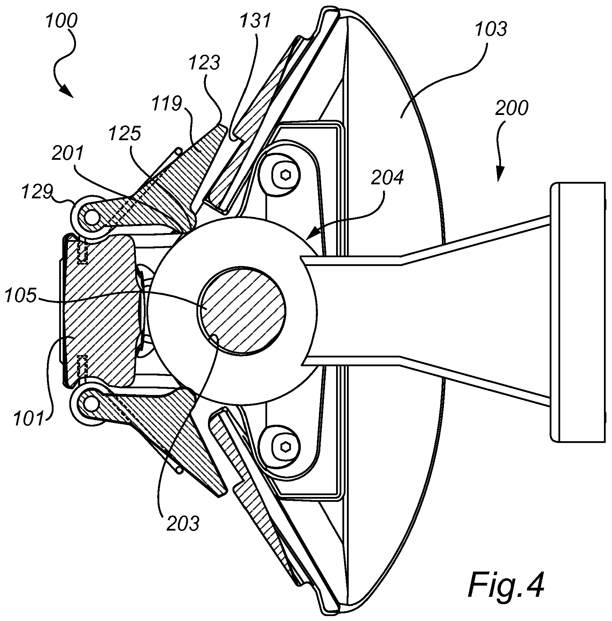

Figure 4 is a top view of the trailer coupling 100 and the connection portion 200 of Fig. 1, wherein the drawbar eye 204 has been received by said trailer coupling 100. Here, it seen how the protrusions 125 of the locking arms 119 engages the annular portion 201 of the drawbar eye 204 as the drawbar eye 204 enters the guiding funnel 103. This causes the locking arms 119 to move towards their unlocking position, thus allowing the guiding funnel 103 to pivot relative to the coupling body 101. Furthermore, as the annular portion 201 of the drawbar eye 204 is aligned with the coupling pin 105, the coupling pin has been moved to its coupling position. This means that the coupling pin 105 engages the inner circumferential walls 203 of the annular portion 201 of the drawbar eye 204 so as to prevent it from leaving the guiding funnel 103. In Fig. 4, as the locking arms 119 are in their unlocking position, the guiding funnel abutting portions 123 no longer engages the ridge-shaped locking portion 131 on either side of the guiding funnel 103. The locking arms 119 are biased towards the locking position by the springs 129, but are prevented from moving there by the protrusions 125 engaging the annular portion 201 of the drawbar eye 204. That the locking arms 119 are in their unlocking position allows the guiding funnel 103 to pivot relative to the coupling body 101, thus allowing the trailer coupling 1 to meet regulatory standards as to the ability of the trailer coupling to accommodate sharp turns of the traction vehicle.

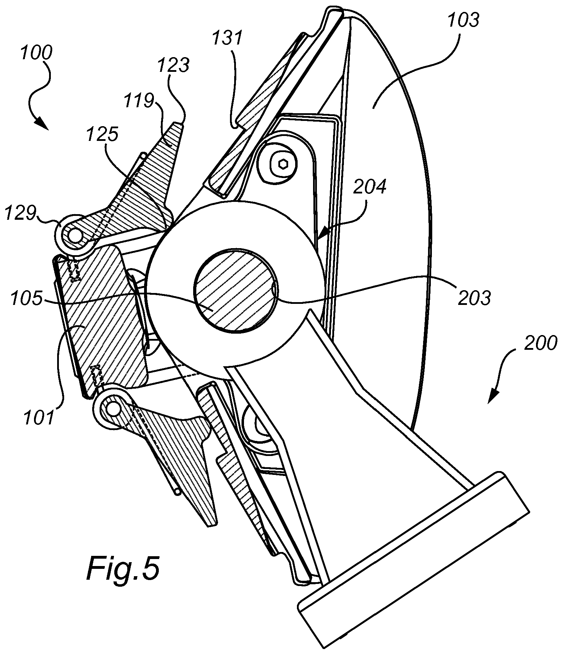

Figure 5 is a top view of the trailer coupling 100 and the connection portion 200 of Fig. 1, wherein the drawbar eye 204 has been received by said trailer coupling 100, and wherein the connection portion 200 has been rotated relative to the trailer coupling 100, thus causing the guiding funnel 103 to rotate with it. This is what the regulatory standards require that a trailer coupling 1 should be able to do. The present invention, with the locking arms 119 being movable from the locking position to the unlocking position, provides this functionality while maintaining the steering capacity of the guiding funnel 103.

The person skilled in the art realizes that the present invention by no means is limited to the preferred embodiments described above. On the contrary, many modifications and variations are possible within the scope of the appended claims. For example, instead of including a connection flange, the connection portion 200 may simply be the front portion of a drawbar.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. Furthermore, any reference signs in the claims should not be construed as limiting the scope.

## Claims

1. A trailer coupling (100) for connecting a traction vehicle to a trailer, comprising:
a coupling body (101), and
a guiding funnel pivotally connected to said coupling body (101), said guiding funnel being configured to receive and guide a drawbar eye (204), wherein
two locking arms (119) connected to opposite sides of said coupling body (101),
wherein said locking arms (119) are movable between a locking position and an unlocking position,
wherein in said locking position, said locking arms (119) engage said guiding funnel so as to prevent it from pivoting relative to said coupling body (101),
wherein in said unlocking position, said locking arms (119) are moved out of engagement with said guiding funnel, and
**characterized in that** said locking arms (119) are arranged to be pushed from said locking position to said unlocking position when a drawbar eye (204) is received in said guiding funnel.

2. The trailer coupling (100) according to claim 1, wherein each one of said locking arms (119) is biased towards said locking position.

3. The trailer coupling (100) according to any one of the preceding claims, wherein said two locking arms (119) are pivotally connected to said coupling body (101).

4. The trailer coupling (100) according to any one of the preceding claims, wherein in said locking position, said locking arms (119) abut a respective locking portion (131) of said guiding funnel so that said locking arms (119) prevent said guiding funnel from pivoting relative to said coupling body (101).

5. The trailer coupling (100) according to claim 4, wherein said guiding funnel has an inner surface and an outer surface, said inner surface being the surface that faces away from the traction vehicle when the trailer coupling (100) is in use, and said outer surface is the surface opposite said inner surface,
wherein said locking portion (131) of said guiding funnel is arranged on said outer surface.

6. The trailer coupling (100) according to any one of the preceding claims, wherein said guiding funnel comprises at least one window (127) for allowing a portion of each one of said two locking arms (119) to extend therethrough, and
wherein each one of said two locking arms (119) comprises a protrusion (125) arranged to extend at least partly inside said guiding funnel when said locking arms (119) are in said locking position, and
wherein said locking arms (119) are arranged to move from a locking position to an unlocking position when said guiding funnel receives a drawbar eye (204) and said drawbar eye (204) abuts said protrusions (125) of said two locking arms (119).

7. The trailer coupling (100) according to any one of the preceding claims, wherein said trailer coupling (100) comprises a coupling pin (105) arranged to lock said drawbar eye (204) in said guiding funnel once said drawbar eye (204) is in a predetermined position inside said guiding funnel.

8. The trailer coupling (100) according to claim 7, wherein said two locking arms (119) are arranged to move from a locking position to an unlocking position in response to said guiding funnel receiving a drawbar in said predetermined position.

## Patentansprüche

1. Anhängerkupplung (100) zum Verbinden eines Zugfahrzeugs mit einem Anhänger, umfassend:
einen Kupplungskörper (101), und
einen Führungstrichter, der schwenkbar mit dem Kupplungskörper (101) verbunden ist, wobei der Führungstrichter konfiguriert ist, eine Zugöse (204) aufzunehmen und zu führen,
wobei zwei Verriegelungsarme (119) mit gegenüberliegenden Seiten des Kupplungskörpers (101) verbunden sind,
wobei die Verriegelungsarme (119) zwischen einer Verriegelungsposition und einer Entriegelungsposition bewegbar sind,
wobei in der Verriegelungsposition die Verriegelungsarme (119) in den Führungstrichter eingreifen, um zu verhindern, dass er sich relativ zu dem Kupplungskörper (101) dreht,
wobei in der Entriegelungsposition die Verriegelungsarme (119) aus dem Eingriff mit dem Führungstrichter gebracht werden, und
**dadurch gekennzeichnet, dass**
die Verriegelungsarme (119) angeordnet sind, um von der Verriegelungsposition zur Entriegelungsposition gedrückt zu werden, wenn eine Zugöse (204) in dem Führungstrichter aufgenommen ist.

2. Anhängerkupplung (100) nach Anspruch 1, wobei jeder der Verriegelungsarme (119) in Richtung der Verriegelungsposition vorgespannt ist.

3. Anhängerkupplung (100) nach einem der vorhergehenden Ansprüche, wobei zwei Verriegelungsarme (119) schwenkbar an dem Kupplungskörper (101) verbunden sind.

4. Anhängerkupplung (100) nach einem der vorhergehenden Ansprüche, wobei in der Verriegelungsposition die Verriegelungsarme (119) an einem jeweiligen Verriegelungsabschnitt (131) des Führungstrichters anliegen, so dass die Verriegelungsarme (119) verhindern, dass sich der Führungstrichter relativ zu dem Kupplungskörper (101) dreht.

5. Anhängerkupplung (100) nach Anspruch 4, wobei der Führungstrichter eine Innenfläche und eine Außenfläche aufweist, wobei die Innenfläche die Fläche ist, die von dem Zugfahrzeug abgewandt ist, wenn die Anhängerkupplung (100) in Gebrauch ist, und die Außenfläche die der Innenfläche gegenüberliegende Fläche ist,
wobei der Verriegelungsabschnitt (131) des Führungstrichters auf die Außenfläche angeordnet ist.

6. Anhängerkupplung (100) nach einem der vorhergehenden Ansprüche, wobei der Führungstrichter mindestens ein Fenster (127) aufweist, durch das sich ein Abschnitt eines jeden der beiden Verriegelungsarme (119) hindurch erstrecken kann, und
wobei jeder der beiden Verriegelungsarme (119) einen Vorsprung (125) umfasst, der angeordnet ist, um sich mindestens teilweise innerhalb des Führungstrichters zu erstrecken, wenn sich die Verriegelungsarme (119) in der Verriegelungsposition befinden, und wobei die Verriegelungsarme (119) angeordnet sind, um sich von einer Verriegelungsposition in eine Entriegelungsposition zu bewegen, wenn der Führungstrichter eine Zugöse (204) aufnimmt und die Zugöse (204) an die Vorsprünge (125) der beiden Verriegelungsarme (119) anstößt.

7. Anhängerkupplung (100) nach einem der vorhergehenden Ansprüche, wobei die Anhängerkupplung (100) einen Kupplungsstift (105) aufweist, der angeordnet ist, um die Zugöse (204) in dem Führungstrichter zu verriegeln, sobald sich die Zugöse (204) in einer vorbestimmten Position innerhalb des Führungstrichters befindet.

8. Anhängerkupplung (100) nach Anspruch 7, wobei die zwei Verriegelungsarme (119) angeordnet sind, um sich von einer Verriegelungsposition in eine Entriegelungsposition zu bewegen, als Reaktion darauf, dass der Führungstrichter in der vorbestimmten Position eine Zugstange aufnimmt.

## Revendications

1. Couplage de remorque (100) pour connecter un véhicule de traction à une remorque, comprenant :
un corps de couplage (101), et
un entonnoir de guidage relié en pivotement audit corps de couplage (101), ledit entonnoir de guidage étant configuré pour recevoir et guider un anneau de timon (204),
dans lequel
deux bras de verrouillage (119) sont reliés à des côtés opposés dudit corps de couplage (101),
dans lequel lesdits bras de verrouillage (119) sont mobiles entre une position de verrouillage et une position de déverrouillage,
dans lequel dans ladite position de verrouillage, lesdits bras de verrouillage (119) engagent ledit entonnoir de guidage de façon à l'empêcher de pivoter par rapport audit corps de couplage (101),
dans lequel dans ladite position de déverrouillage, lesdits bras de verrouillage (119) sont déplacés hors de l'engagement avec ledit entonnoir de guidage, et
**caractérisé en ce que**
lesdits bras de verrouillage (119) sont agencés pour être poussés de ladite position de verrouillage vers ladite position de déverrouillage lorsque l'anneau de timon (204) est reçu dans ledit entonnoir de guidage.

2. Couplage de remorque (100) selon la revendication 1, dans lequel chacun desdits bras de verrouillage (119) est décalé vers ladite position de verrouillage.

3. Couplage de remorque (100) selon l'une quelconque des revendications précédentes, dans lequel lesdits deux bras de verrouillage (119) sont reliés en pivotement audit corps de couplage (101).

4. Couplage de remorque (100) selon l'une quelconque des revendications précédentes, dans lequel dans ladite position de couplage, lesdits bras de verrouillage (119) sont adjacents à une partie de verrouillage (131) respective dudit entonnoir de guidage de façon à ce que lesdits bras de verrouillage (119) empêchent ledit entonnoir de guidage de pivoter par rapport audit corps de couplage (101).

5. Couplage de remorque (100) selon la revendication 4, dans lequel ledit entonnoir de guidage a une surface intérieure et une surface extérieure, ladite surface intérieure étant la surface qui est à distance du véhicule de traction lorsque le couplage de remorque (100) est en utilisation, et ladite surface extérieure est la surface opposée à ladite surface intérieure,
dans lequel ladite partie de verrouillage (131) dudit entonnoir de guidage est agencée sur ladite surface extérieure.

6. Couplage de remorque (100) selon l'une quelconque des revendications précédentes, dans lequel ledit entonnoir de guidage comprend au moins une fenêtre (127) pour permettre à une partie de chacun desdits deux bras de verrouillage (119) de s'étendre au travers, et
dans lequel chacun desdits bras de verrouillage (119) comprend une saillie (125) agencée pour s'étendre au moins partiellement à l'intérieur dudit entonnoir de guidage lorsque lesdits bras de verrouillage (119) sont dans ladite position de verrouillage, et
dans lequel lesdits bras de verrouillage (119) sont agencés pour passer d'une position de verrouillage à une position de déverrouillage lorsque ledit entonnoir de guidage reçoit un anneau de timon (204) et ledit anneau de timon (204) est adjacent auxdites saillies (125) desdits deux bras de verrouillage (119).

7. Couplage de remorque (100) selon l'une quelconque des revendications précédentes, dans lequel ledit couplage de remorque (100) comprend une tige de couplage (105) agencée pour verrouiller ledit anneau de timon (204) dans ledit entonnoir de guidage une fois que ledit anneau de timon (204) est dans une position prédéterminée à l'intérieur dudit entonnoir de guidage.

8. Couplage de remorque (100) selon la revendication 7, dans lequel lesdits deux bras de verrouillage (119) sont agencés pour passer d'une position de verrouillage à une position de déverrouillage en réponse audit entonnoir de guidage recevant un anneau de timon dans ladite position prédéterminée.
